# EUROPÄISCHE PATENTSCHRIFT

(11) **EP 0 421 515 B1**
(45) Veröffentlichungstag und Bekanntmachung des Hinweises auf die Patenterteilung: **22.03.1995**
(21) Anmeldenummer: 90202534.5
(22) Anmeldetag: 25.09.1990
(51) Int. Cl.: H03M 7/30, H03M 7/32, H03M 7/00, H03M 9/00

(54) **Schaltungsanordnung zur kanalspezifischen Verarbeitung eines mehrkanaligen Eingangssignals**
Circuit for channel specific processing of a multichannel inputsignal
Circuit pour le traitement par canal d'un signal d'entrée à canaux multiples

(30) Priorität: 30.09.1989 DE 3932801
(43) Veröffentlichungstag der Anmeldung: 10.04.1991
(73) Patentinhaber: Philips Patentverwaltung GmbH, 22335 Hamburg (DE); Philips Electronics N.V., 5621 BA Eindhoven (NL)
(72) Erfinder: Hessler, Peter, D-8520 Erlangen (DE); Schmidt, Manfred, D-8740 Salz (DE); Selbach, Bernd, D-8501 Eckental (DE); Behrens, Michael, D-8500 Nürnberg 30 (DE)
(74) Vertreter: Peuckert, Hermann, Dipl.-Ing.

(56) Entgegenhaltungen:
- DE-A- 2 517 102
- DE-A- 3 901 909
- US-A- 4 797 654

## Beschreibung

Die Erfindung betrifft eine Schaltungsanordnung zur kanalspezifischen Verarbeitung eines mehrkanaligen Eingangssignals, das aus zwei Signaltypen bestehen kann, einem ersten Typ, bei dem die Signale der Kanäle alle bitorientiert und einem zweiten Typ, bei dem die Signale aller Kanäle bitgruppenorientiert codiert sind.

Derartige Schaltungsanordnungen werden zum Beispiel in Übertragungssystemen gebraucht, die in der Lage sind, zwei Typen von Signalen zu übertragen. Die beiden Signaltypen unterscheiden sich durch unterschiedliche Codierungsverfahren, nach denen sie codiert sind. Die beiden Codierungsverfahren, an die hier speziell gedacht wird, sind die PCM-Codierung (byteorientiert) und alle Arten der Deltamodulation (bitorientiert).

Mit kanalspezifischer Verarbeitung ist gemeint, daß das Signal eines bestimmten Kanals nach einer speziellen Vorschrift verarbeitet werden soll und diese Vorschrift von Kanal zu Kanal eine andere sein kann. Bei dem Wort "Verarbeitung" ist zum Beispiel an die Filterung eines Kanalsignales gedacht oder auch - wie weiter unten noch ausführlicher dargelegt wird - an die Umcodierung eines Signals vom ersten Typ in ein Signal vom zweiten Typ und umgekehrt (Transcodierung).

Die kanalspezifische Verarbeitung eines nach Rahmen strukturierten, mehrkanaligen Signals wäre durch einen extrem schnellen Signalprozessor ohne weiteres möglich, sofern ein solcher sich an der gewünschten Stelle mit vertretbarem Aufwand einsetzen läßt. In der Regel sind aber die Kosten für einen einzigen Prozessor zu hoch oder dessen Rechenleistung zu niedrig. In solchen Fällen ist es üblich, Mehrprozessorsysteme einzusetzen.

Der Erfindung liegt die Aufgabe zugrunde, eine Schaltungsanordnung mit parallel arbeitenden Prozessoren für den oben genannten Zweck anzugeben.

Diese Aufgabe wird durch die Maßnahmen gelöst, die dem Kennzeichen des Anspruchs 1 zu entnehmen sind.

Die erfindungsgemäße Schaltungsanordnung hat den Vorteil, daß nur eine einfache Steuersoftware für den Schnittstellenprozessor erforderlich ist. Außerdem kann die Arbeitssoftware für alle Arbeitsprozessoren identisch sein, wenn alle die gleiche Aufgabe zu bewältigen haben. Bei hardwaremäßig gleichen Arbeitsprozessoren sind nämlich alle ihre Anschlüsse ebenfalls gleich.

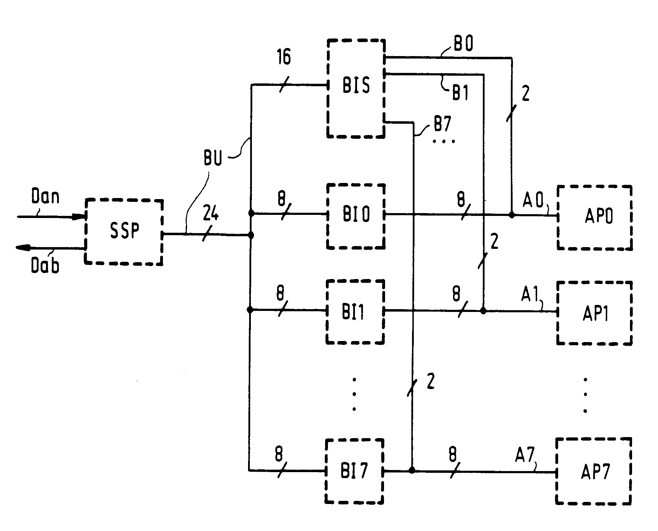

Ein weiterer Vorteil ist die erleichterte Synchronisation aller Schreib- und Lesevorgänge der Arbeitsprozessoren; sie wird allein durch die Software des Schnittstellenprozessors hergestellt. Eine solche Synchronisation ist zum Beispiel dann erforderlich, wenn die verarbeiteten Daten der Arbeitsprozessoren Bestandteile eines Audio-Konferenzsignales sind und die Arbeitsprozessoren über weitere (in der Figur nicht gezeigte) Schnittstellen miteinander verbunden sind (vgl. wegen der Konferenzschaltung z.B. die DE 39 01 909).

Anhand der Figur soll die Erfindung näher erläutert werden.

Die Figur zeigt ein Prinzipschaltbild der erfindungsgemäßen Schaltungsanordnung.

In der Figur wird ein nach Rahmen strukturiertes PCM-Eingangssignal - hier Signal des zweiten Typs genannt - über eine Leitung Dan einem Schnittstellenprozessor SSP zugeführt. Jedes Kanalsignal des PCM-Eingangssignales hat eine Bitrate von 64 kbit/s.

Über einen nicht näher gekennzeichneten Sonderkanal wird dem Schnittstellenprozessor SSP durch eine Kennung mitgeteilt, daß es sich bei dem Eingangssignal um ein Signal des zweiten Typs handelt. Das Eingangssignal soll durch die Schaltung nach der Figur in ein Signal des ersten Typs transcodiert werden, also in ein Signal, das bitorientiert ist. Im vorliegenden Beispiel handelt es sich um ein DCDM-Signal (Digitaly Controlled Delta-Modulation Signal) mit einer Bitrate von 16 kbit/s pro Kanal.

Die eigentliche Transcodierung wird von acht Arbeitsprozessoren AP0 bis AP7 vorgenommen. Der Datenfluß zu und von den Arbeitsprozessoren AP0 bis AP7 über Busleitungen BU, B0, B1,...B7 und A0, A1,...A7 sowie über bidirektionale Schnittstellen BIS, BI0, BI1,...BI7 wird vom Schnittstellenprozessor SSP über (in der Figur nicht gezeigte) Steuerleitungen gesteuert. Mit speziellen Adressen kann der Schnittstellenprozessor SSP dann die Arbeitsspeicher der Prozessoren AP0, AP1,...AP7 über die Schnittstellen BIS, BI0,...BI7 für Schreib- und Lesezugriffe ansprechen.

Im vorliegenden Beispiel besteht das Eingangssignal aus 32 PCM-Kanälen, deren Datenworte zyklisch auf die Arbeitsprozessoren über acht parallele Datenleitungen des Bussystems BU sowie über die Leitungen A0 bis A7 in die Arbeitsspeicher der Arbeitsprozessoren AP0 bis AP7 eingeschrieben werden. Da nur acht Arbeitsprozessoren vorgegesehen sind, werden die Daten von jeweils vier Kanälen von einem Prozessor transcodiert, womit dessen Rechenleistung (zum Beispiel die des DSP56001) nahezu ausgeschöpft ist.

Die Bits der ersten 16 transcodierten Kanalsignale werden über Doppelleitungen B0, B1,...B7 parallel und gleichzeitig an die Schnittstelle BIS für Signale des ersten Typs gegeben und von dort über 16 parallele Leitungen in den Schnittstellenprozessor SSP eingelesen. Dieser Vorgang wird für die restlichen 16 transcodierten Kanalsignale innerhalb eines Rahmens des umcodierten mehrkanaligen Signales wiederholt.

Der Prozessor SSP nimmt eine Parallel-Serien-Wandlung der Daten vor, ordnet sie nach Rahmen und gibt sie als Ausgangssignal über die Ausgangsleitung Dab ab.

Die zeitliche Koordination aller geschilderten Vorgänge wird durch die Steuersignale des Schnittstellenprozessors SSP bewirkt. Der Schnittstellenprozessor SSP selbst ist auf den Takt der ankommenden und abgehenden seriellen Daten synchronisiert. Da Synchronisation und Taktung von Bausteinen im vorliegenden Zusammenhang eine untergeordnete Rolle spielen, ist auf sie nicht näher eingegangen.

## Patentansprüche

1. Schaltungsanordnung zur kanalspezifischen Verarbeitung eines mehrkanaligen Eingangssignals, das aus zwei Signaltypen bestehen kann, einem ersten Typ, bei dem die Signale der Kanäle alle bitorientiert und einem zweiten Typ, bei dem die Signale aller Kanäle bitgruppenorientiert codiert sind,
dadurch gekennzeichnet,
daß
1.1 ein Schnittstellenprozessor (SSP), dem das Eingangssignal (Dan) zugeführt wird, mit einer bidirektionalen, steuerbaren Schnittstelle (BIS) für Signale des ersten Typs und mindestens mit zwei ebensolchen Schnittstellen (BI0, BI1,...BI7) für Signale des zweiten Typs gekoppelt ist,
1.2 jede Schnittstelle für Signale des zweiten Typs (BI0, BI1,...BI7) mit einem Arbeitsprozessor (AP0, AP1,...AP7) gekoppelt ist,
1.3 mindestens ein Datenausgang der Schnittstelle für Signale des ersten Typs (BIS) mit einem der Arbeitsprozessoren (AP0, AP1, ... AP7) gekoppelt ist,
1.4 die von den Arbeitsprozessoren (AP0, AP1, ...AP7) verarbeiteten Kanalsignale über die Schnittstellen (BIS, BI0, BI1,...BI7) an den Schnittstellenprozessor (SSP) geleitet werden, der sie zu einem mehrkanaligen Ausgangssignal (Dab) zusammenfaßt.

## Claims

1. A circuit arrangement for channel-specific processing of a multi-channel input signal that may consist of two types of signals, a first type where all channel signals are encoded in a bit-oriented fashion and a second type where all channel signals are encoded in a bit-group-oriented fashion, characterized in that
1.1 an interface processor (SSP) which receives the input signal (Dan) is coupled to a bidirectional, controllable interface (BIS) for signals of the first type and to at least two similar interfaces (BI0, BI1, ..., BI7) for signals of the second type,
1.2 each interface (BI0, BI1, ..., BI7) for signals of the second type is coupled to a processor (AP0, AP1, ..., AP7),
1.3 at least one data output of the interface for signals of the first type (BIS) is coupled to one of the processors (AP0, AP1, ..., AP7),
1.4 the channel signals processed by the processors (AP0, AP1, ..., AP7) are applied, via the interfaces (BIS, BI0, BI1, ..., BI7), to the interface processor (SSP) which combines these signals so as to form a multi-channel output signal (Dab).

## Revendications

1. Montage de circuit pour le traitement par canal d'un signal d'entrée à plusieurs canaux, qui peut être constitué de deux types de signaux, à savoir un premier type dans lequel les signaux des canaux sont tous codés au niveau du bit, et un deuxième type dans lequel les signaux de tous les canaux sont codés au niveau du groupe de bits, caractérisé en ce que :
1.1 un processeur d'interface (SSP), auquel est acheminé le signal d'entrée (Dan), est couplé avec une interface (BIS) pouvant être commandée, bidirectionnelle, pour des signaux du premier type et au moins avec deux interfaces du même type (BI0, BI1 ..., BI7) pour les signaux du deuxième type,
1.2 chaque interface pour des signaux du deuxième type (BI0, BI1, BI7) est couplée à un processeur de traitement (AP0, AP1, AP7),
1.3 au moins une sortie de données de l'interface pour des signaux du premier type est couplée à un des processeurs de traitement (AP0, AP1, ..., AP7),
1.4 les signaux de canaux traités par les processeurs de traitement (AP0, AP1, ..., AP7) sont acheminés via les interfaces (BIS, BI0, BI1,... BI7) au processeur d'interface (SSP) qui les rassemble sous la forme d'un signal de sortie à plusieurs canaux (Dab).
